Europäisches Patentamt

European Patent Office

Office européen des brevets

(19)

(11) Veröffentlichungsnummer: **0 226 880**
**B1**

(12) # EUROPÄISCHE PATENTSCHRIFT

(45) Veröffentlichungstag der Patentschrift:
08.03.89

(21) Anmeldenummer: 86116639.5

(22) Anmeldetag: 29.11.86

(51) Int. Cl.⁴: **A 62 D 3/00,** B 09 B 1/00,
G 21 F 9/16

(54) Verfahren zur Konditionierung von wasserlöslichen Sonderabfällen.

(30) Priorität: 21.12.85 DE 3545592

(43) Veröffentlichungstag der Anmeldung:
01.07.87 Patentblatt 87/27

(45) Bekanntmachung des Hinweises auf die Patenterteilung:
08.03.89 Patentblatt 89/10

(84) Benannte Vertragsstaaten:
AT BE CH DE FR GB LI LU NL SE

(56) Entgegenhaltungen:
EP-A-0 008 078
EP-A-0 130 773
DD-A-149 136
DE-B-1 166 392
DE-B-2 339 802
GB-A-1 309 281
US-A-4 518 507

(73) Patentinhaber: Nukem GmbH, Rodenbacher
Chaussee 6 Postfach 11 00 80, D-6450 Hanau 11
(DE)

(72) Erfinder: Huschka, Hans, Dr., Grünaustrasse 5,
D-6450 Hanau 9 (DE)
Erfinder: Maurer, Paul- Gerhard, Dr., Bergstrasse 1,
D-6451 Neuberg 2 (DE)
Erfinder: Neupert, Daniel, Dr., Ronnenbergring 47,
D-8755 Alzenau (DE)

## Beschreibung

Die Erfindung betrifft ein Verfahren zur Konditionierung von wasserlöslichen Sonderabfällen, insbesondere von Salzen und Salzgemischen, durch Versetzung mit Zement, Wasser, Zuschlägen und gegebenenfalls Zusatzstoffen, und Herstellung von mit einer sonderabfallfreien Randschicht versehenen Abfallkörpern aus diesen Gemischen.

Eine Vielzahl von Sonderabfällen mit großer Wasserlöslichkeit, z. B. Salze und Salzgemische aus der Rauchgasreinigung und sonstigen Industriebereichen, die zum Teil mit toxischen Schwermetallen belastet sind, müssen in Sonderabfalldeponien abgelagert werden, da eine stoffliche Verwertung meist nicht möglich ist. Eine Ablagerung dieser Abfälle in Sonderabfalldeponien ohne Konditionierung und ohne Immobilisierung der Schadstoffe, z. B. in Kunststoffsäcken, in Fässern oder in Tonkasetten, ist keine zufriedenstellende Lösung, da ein absoluter Wasserabschluß nicht realisierbar und ein Wassereinbruch nicht auszuschließen ist. Die löslichen Bestandteile der Abfälle werden dann in kurzen Zeiträumen über das Sickerwasser ausgetragen. Ohne Sammlung und anschließende kostenintensive Nachbehandlung des Sickerwassers ist eine Gefährdung von Oberflächengewässern und von Grundwasser zu erwarten. Auflagen von Seiten des Gesetzgebers zielen deshalb darauf hin, diese Gefahren zu vermeiden. Als Problemlösung kommt in erster Linie eine Konditionierung der Sonderabfälle über eine Verfestigung in Frage, die eine Freisetzung der Schadstoffe für lange Zeiträume weitgehend verhindert und bei Auslaugung lediglich zu Eluatkonzentrationen führt, die unter den gesetzlichen Grenzwerten für eine direkte Einleitung in Oberflächengewässer oder in der Größenordnung des natürlichen Gehaltes im Grundwasser liegen.

Um eine solche sichere übertägige Deponierung von wasserlöslichen Abfällen gewährleisten zu können, muß das abzulagernde Produkt folgenden Hauptanforderung genügen:

a) Immobilisierung der Schadstoffe, d.h. große Auslaugbeständigkeit und, wenn überhaupt, eine kontrollierte Freisetzung von Schadstoffen.
b) Alterungsbeständigkeit, d.h. die mechanische und chemische Integrität des Endproduktes über lange Zeit muß in kurzer Zeit erreicht und über lange Zeit erhalten werden.
c) Wirtschaftlichkeit, d.h. große Abfalbeladungen im Endprodukt und einfaches Verfahrenskonzept.

Auf dem Gebiet der Konditionierung bzw. Verfestigung von Sonderabfällen sind eine Vielzahl von Verfahren bekannt und zum Teil im Einsatz. Als Konditionierungsmittel dienen beispielsweise Zement, Wasserglas, Puzzolan, Kalk, Gips oder organische Polymere. Die Verfestigung dient hauptsächlich als Konditionierungsverfahren für Säureharze, Flugaschen und -stäube, wäßrige Schlämme und Ölschlämme. Die Konditionierung weitgehend wasserlöslicher Sonderabfälle in Zement kommt selten zum Einsatz, da der Sonderabfallgehalt im Zementprodukt in diesen Fällen durch die Beeinträchtigung des Erstarrungs- und Abbindeverhaltens auf relativ niedrige Werte begrenzt ist.

In der DD-PS-149 136 wird ein Verfahren zur Ab- und Endlagerung für eine Vielzahl von Abfällen beschrieben, die überwiegend mineralischen Ursprungs sind, meist geringe Wasserlöslichkeit besitzen und auch fast durchweg zementverträgliche Stoffe enthalten. Diese Abfälle werden einfach mit durch chemische Umsetzung erhärtenden oder thermoplastischen geschmolzenen Bindemittel, wie Zement, Kalk, Gips oder Bitumen, gemischt und in den Deponieraum eingebracht. Besondere Maßnahmen zur Erhöhung der Auslaugbeständigkeit oder der Alterungsbeständigkeit werden nicht getroffen.

In der DE-OS-3 426 800 wird mit der Herstellung von versiegelten sphärischen Salz-/Zementkörpern, die in einer salzfreien Zementmatrix eingebettet werden, ein Verfahren aufgezeigt, das neben einer hohen Salzbeladung bis zu 50 Gew.-% im Endprodukt ein Barrierensystem zur Reduzierung der Auslaugefähigkeit und Erhöhung der Auslaugbeständigkeit besitzt. Nachteile dieses Verfahrens sind, daß zum Aufbau des Barrierensystems mehrere Verfahrensschritte durchgeführt werden müssen, die sich sowohl in den Investitions- als auch Betriebskosten niederschlagen.

Es war daher Aufgabe der vorliegenden Erfindung, ein Verfahren zur Konditionierung von wasserlöslichen Sonderabfällen zu entwickeln, insbesondere von Salzen und Salzgemischen, durch Versetzen mit Zement, Wasser, Zuschlägen und gegebenenfalls Zusatzstoffen, und Herstellung von mit einer sonderabfallfreien Randschicht versehenen Abfallkörpern aus diesen Gemischen, das trotz großer Salzbeladung einfach durchzuführen ist und keine hohen Investitions- und Betriebskosten verursacht.

Diese Aufgabe wird erfindungsgemäß dadurch gelöst, daß mit Hilfe eines beweglichen Gerätes ein schichtweiser Aufbau der Abfallkörper in einem Arbeitsgang erfolgt, indem zunächst als Bodenschicht ein sonderabfallfreies Zement Wassergemisch mit einem Wasser/Zement-Wert von 0,2 bis 0,8 vorgelegt wird, dann zum Aufbau des Abfallkörpers von außen nach innen und von unten nach oben diesem Zement/Wassergemisch der zu deponierende Sonderabfall mit steigender Konzentration von 0 bis 70 Gew.-% zugemischt wird, wobei der Zement/Wasser-Wert bis auf 1,2 gesteigert wird, und abschließend in Richtung auf die Deckschicht und die seitlichen Randzonen der Sonderabfallgehalte nach und nach wieder auf 0 Gew.-% und der Wasser/Zement-Wert wieder auf dem zuvor eingestellten Wert zwischen 0,2 bis 0,8 zurückgenommen wird.

Vorzugsweise erfolgt die Steigerung und die Zurücknahme der Sonderabfallzugabe zum Zement/Wassergemisch kontinuierlich, obwohl sie auch stufenweise durchgeführt werden können.

Bei der Anwesenheit von löslichen Schwermetallen im Sonderabfall ist es vorteilhaft, dem Zement/Wassergemisch 1 bis 20 Gew.-% Natriumsulfid zuzusetzen. Außerdem kann es von Vorteil sein, 10 bis 60 Gew.-% des Zementanteils durch Calciumhydroxid zu ersetzen.

Mit Hilfe dieser Verfahren können über die Steuerung der Sonderabfall- und der Zement- bzw. Wasserzugabe deponiefähige Abfallkörper mit abfallfreien Seitenrandzonen, Boden- und Deckschichten hergestellt werden, die sehr auslaugebeständig sind und trotzdem eine große Salzmenge enthalten.

Beispielsweise wird über einer Deponiekassette ein Misch- und Förderaggregat (z. B. Extruder) beweglich (z. B. über Rollenbahnen) installiert, so daß es über jeden beliebigen Punkt der Bodenfläche der Kassette gefahren werden kann. Die Peripherieaggregate, wie Silos für Zement, Zuschläge und den zu verfestigenden Sonderabfall sowie die Anmachwasserstation, befinden sich an einem festen Standort innerhalb des Gesamtdeponiebereichs und sind über flexible pneumatische und sonstige Förderleitungen mit dem Mischaggregat verbunden.

Zu Beginn der Sonderabfallverfestigung wird am Misch- und Förderaggregat mit Durchflußreglern ein Zement/Wassergemisch mit einem Wasser/Zement-Wert zwischen 0,2 und 0,8 eingestellt. Während des Austrags des Zement-/Wassergemisches wird das Misch- und Förderaggregat mäanderförmig über den Kassettenboden gefahren, bis der gesamte Boden mit einer ca. 5 - 25 cm dicken Zementmörtelschicht bedeckt ist. Nach Herstellung der sonderabfall- bzw. salzfreien Bodenschicht wird eine zweite Schicht analog der ersten aufgebaut, jedoch wird ausgehend von einer salzfreien Randzone im Zement-Wassergemisch unter gleichzeitiger Erhöhung des Wasser/Zement-Wertes bis auf 1,2 zunehmend der Sonderabfallgehalt gesteigert und an den gegenüberliegenden Randzonen wieder auf 0 Gew.-% zurückgefahren. Der höchste Sonderabfallgehalt von 70 Gew.-% und damit auch der höchste Wasser/Zement-Wert wird im Zentrum des Abfallkörpers eingestellt. Nach Erreichen des Maximums an Sonderabfallgehalt in der Mitte des Abfallkörpers wird nach und nach der Abfallgehalt in den jeweils nachfolgenden Schichten reduziert. In jeder Schicht wird der Abfallgehalt an der Randzone auf 0 Gew.-% gefahren. Die letzte Lage wird analog der Bodenschicht zur Erzeugung einer Deckschicht ohne Abfallzugabe aufgebracht.

Durch diesen schichtweisen Aufbau des Abfallkörpers und der hohen Viskosität der ausgebrachten Mischung ist es möglich, auch ohne gesonderte Einschalung einen Abfallkörper mit salzfreien Rand-, Boden- und Deckenzonen zu erzeugen. Der Abfallkörper kann dabei mannigfache äußere Formen erhalten.

Über eine mit dem Misch- und Förderaggregat koordinierte Prozeßsteuerung für die Dosier-, Misch- und Fördereinheiten, kann die Herstellung der Abfallkörper weitgehend automatisiert werden. Bei segmentweiser Einteilung eines geplanten Abfallkörpers können dann koordinatenabhängig die Sonderabfallgehalte stufenweise oder kontinuierlich eingestellt werden.

Als Zementsorten werden vorteilhafterweise Portland-Zemente eingesetzt. Insbesondere in den Fällen, bei welchen in der zu erwartenden Auslaugflüssigkeit oder im Sonderabfall selbst Sulfatanteile enthalten sind, ist es von Vorteil, Portlandzement mit sehr kleinem Anteil an Calciumaluminat zu verwenden, wodurch ein sogenanntes Gipstreiben bedingt durch Ettringitbildung verhindert wird.

Als Zuschlagstoff sowohl in bezug auf Wirtschaftlichkeit als auch auf eine bessere Verarbeitbarkeit hat sich Steinkohlenflugasche als vorteilhaft bewiesen, wobei 10 bis 60 Gew.-% des Zementanteils durch Flugasche ersetzt werden können.

Aushärtungsprobleme können insbesondere bei Salzen auftreten, die Gehalte von mehr als 0,1 Gew.-% an Zink, Mangan, Blei oder sonstigen zur amphoteren Hydroxidbildung befähigten Schwermetallen aufweisen. Dieses Problem löst man dadurch, daß dem Wasser in Abhängigkeit vom Schwermetallgehalt bis zu 20 Gew. % Natriumsulfid zugemischt werden. Diese Zugabe bringt den weiteren Vorteil, falls Auslaugflüssigkeit an den in der Zementmatrix eingebetteten Sonderabfall vordringt, daß die Schwermetallauslaugung direkt abhängig ist von dem Löslichkeitsverhalten, d.h. dem Löslichkeitsprodukt der entsprechenden Schwermetallsulfide. Dadurch wird die Auslaugbeständigkeit weiter erhöht.

Die Zugabe von 10 bis 60 Gew.-% Calciumhydroxid, bezogen auf Zementanteil ohne Steinhohlenflugaschenanteil, hat den positiven Effekt, daß größere Schwankungsbreiten im Anionengehalt des Sonderabfalls, z. B. Chlorid oder Sulfat, die die Verarbeitung und das nachfolgende Abbinden negativ beeinflussen, toleriert werden können. Die die Aushärtung beeinflussenden Schwermetalle werden ebenfalls in ihrer Wirksamkeit eingeschränkt, so daß bei Calciumhydroxidzugabe bei einigen Sonderabfällen auf den Zusatz von Natriumsulfid verzichtet werden kann.

Durch die abfallfreie Boden- und Deckschicht sowie die abfallfreien Randzonen wird ein Zutritt von Auslaugflüssigkeit an den in die Zementmatrix eingebundenen Sonderabfall

weitgehend verhindert. Bei Zutritt von Auslaugflüssigkeit erfolgt die Auslaugung diffusionskontrolliert. Aus der Literatur ist bekannt, daß bei reinem Zementstein, wie er in den Randzonen, der Boden- und der Deckschicht vorliegt, bei eingestellten Wasser/Zement-Werten zwischen 0,2 und 0,8 Wasserdurchlässigkeitswerte von $10^{-12}$ bis $10^{-10}$ cm/s erziel werden, d.h. dem Zutritt von Auslaugflüssigkeit zum Sonderabfall ist eine sehr wirksame Barriere entgegengestellt.

Im Labormaßstab (2-kg = Maßstab) wurden Salze aus einem Rauchgaswaschsystem (Chemische Zusammensetzung: 14 % Ca, 12 % Na, 35,2 Cl, 15,5 % $SO_4^{2-}$, 0,03 % Cd, 0,05 % Cr, 0,27 % Cu 0,03 % Ni, 0,58 % Pb und 1,1 % Zn, Wasserlöslichkeit: ca. 60 %) wie oben beschrieben mit mittleren Einbringungsraten an Salz von 40 - 55 Gew.-% verfestigt. Nach Fertigstellung des Abfallkörpers in einer Verschalung wurde dieser nach 12 Stunden Aushärtung mit einer Bitumenschicht versehen und nach 2 Stunden in gleicher Herstellungsweise ein zweiter Abfallkörper in die Verschalung eingebracht. Auf diese Weise wurden vier Abfallkörper aufeinander geschichtet. Bei mechanischen Belastungstests wurde nachgewiesen, daß nach Aushärtung dieser Abfallkörper von außen bewirkte Spannungen infolge des plastischen Verhaltens der Bitumenzwischenschichten zu keinen den gesamten mehrlagigen Abfallkörper durchdringenden Rissen führen und daß der Bitumen in partial aufgetretene Risse hineinkriecht.

Es wurden auch würfelförmige Abfallkörper hergestellt, die dann durch Beschichten und Vergießen mit Bitumen in 0,3 cm Schichtdicke zu größeren Abfallkörpern zusammengefügt wurden.

Die so hergestellten Abfallkörper eignen sich hervorragend zur Deponierung in oberirdischen Deponien.

## Patentansprüche

1. Verfahren zur Konditionierung von wasserlöslichen Sonderabfällen, insbesondere von Salzen und Salzgemischen, durch Versetzen mit Zement, Wasser, Zuschlägen, und gegebenenfalls Zusatzstoffen, und Herstellung von mit einer sonderabfallfreien Randschicht versehenen Abfallkörpern aus diesen Gemischen, dadurch gekennzeichnet, daß mit Hilfe eines beweglichen Gerätes ein schichtweiser Aufbau der Abfallkörper in einem Arbeitsgang erfolgt, indem zunächst als Bodenschicht ein sonderabfallfreies Zement-/Wassergemisch mit einem Wasser/Zement-Wert von 0,2 bis 0,8 vorgelegt wird, dann zum Aufbau des Abfallkörpers von außen nach innen und von unten nach oben diesem Zement/Wassergemisch der zu deponierende Sonderabfall mit steigender Konzentration von 0 bis 70 Gew.-% zugmischr wird, wobei der Wasser/Zement-Wert bis auf 1,2 gesteigert wird, und abschließend in Richtung auf die Deckschicht und die seitlichen Randzonen der Sonderabfallgehalt nach und nach wieder auf 0 Gew.-% und der Wasser/Zement-Wert auf den zuvor eingestellten Wert zwischen 0,2 bis 0,8 zurückgenommen wird.

2. Verfahren nach Anspruch 1, dadurch gekennzeichnet, daß nach Vorlage eines Zement-/Wassergemisches der Sonderabfallgehalt von 0 bis 70 Gew.-% kontinuierlich gesteigert wird und dann wieder kontinuierlich sowohl an den seitlichen Randzonen als auch zur Erzeugung der Deckschicht auf 0 Gew.-% zurückgenommen wird.

3. Verfahren nach Anspruch 1 und 2, dadurch gekennzeichnet, daß bei Anwesenheit von löslichen Schwermetallen im Sonderabfall dem Zement-/Wassergemisch 1 bis 20 Gew.-% Natriumsulfid zugesetzt werden.

4. Verfahren nach Anspruch 1 bis 3, dadurch gekennzeichnet, daß 10 bis 60 Gew.-% des Zementanteils durch Calciumhydroxid ersetzt werden.

## Claims

1. Process for conditioning water-soluble special-category wastes, in particular of salts and salt mixtures, by mixing with cement, water, aggregate and optionally additives, and producing from these mixtures waste structures which have a peripherat layer which is free from special-category waste, characterized in that, with the aid of moveable equipment, the waste structure is built up in layers in one operation by initially introducing, as the base layer, a cement/water mixture which is free from special-category waste and has a water/cement ratio of from 0.2 to 0.8, then, in order to build up the waste structure, this cement/water mixture is admixed with the spexial-category waste to be dumped in a concentration increasing from 0 to 70 % by weight from the outside inward and from bottom to top, the water/cement ratio being increased to 1.2, and the content of special-category waste is subsequently gradually reduced back to 0 % by weight and the watercement ratio is reduced back to the previously established value between 0.2 to 0.8 in the direction of the top layer and the lateral peripheral zones.

2. Process according to Claim 1, characterized in that, after initial introduction of a cement/water mixture, the content of special-category waste is continuously increased from 0 to 70 % by weight and then continuously reduced back to 0 % by weight both at the lateral peripheral zones and in order to produce the top layer.

3. Process according to Claim 1 and 2, characterized in that, if soluble heavy metals are present in the special-category waste, 1 to 20 % by weight of sodium sulph ide are added to the cement/water mixture.

4. Process according to Claim 1 to 3, characterized in that 10 to 60 % by weight of the cement are replaced by calcium hydroxide.

**Revendications**

1. Procédé pour le conditionnement de déchets spéciaux solubles dans l'eau, en particulier de sels et mélanges de sels, par addition de ciment, eau, granulats et éventuellement additifs, et la production à partir de ces mélanges de blocs de déchets munis d'une couche périphérique exempte de déchets spéciaux, caractérisé en ce qu'à l'aide d'un appareil mobile on effectue en une opération, une construction par couches du bloc de déchets, en disposant d'abord en tant que couche de fond, un mélange d'eau et ciment exempt de déchets spéciaux, ayant un rapport eau/ciment de 0,2 à 0,8, puis en ajoutant à ce mélange d'eau et ciment, pour la construction du bloc de déchets, de l'extérieur vers l'intérieur et de bas en haut, le déchet spécial à déposer, en une concentration croissant de 0 à 70 % en poids, ce par quoi le rapport eau/ciment est accru à 1,2 et en ramenant ensuite peu à peu à 0 % en poids, les teneurs en déchets spéciaux en direction de la couche de couverture et des zones périphériques latérales, et le rapport eau/ciment à la valeur ajustée auparavant, comprise entre 0,2 et 0,8.

2. Procédé selon la revendication 1, caractérisé en ce qu'après dépôt préliminaire d'un mélange ciment/eau, de 0, on augmente en continu la teneur en déchets spéciaux jusqu'à 70 % en poids, et on la ramène ensuite en continu à 0 % en poids, aussi bien au niveau des zones périphériques latérales que pour la production de la couche de couverture.

3. Procédé selon les revendications 1 et 2, caractérisé en ce que, dans le cas de présence de métaux lourds solubles dans le déchet spécial, on ajoute au mélange ciment/eau 1 à 20 % en poids de sulfure de sodium.

4. Procédé selon l'une quelconque des revendications 1 à 3, caractérisé en ce que l'on remplace de 10 à 60 % en poids de la quantité de ciment par de l'hydroxyde de calcium.